# FASCICULE DE BREVET EUROPEEN

(11) **EP 3 934 948 B1**
(45) Date de publication et mention de la délivrance du brevet: **25.01.2023**
(21) Numéro de dépôt: 20711657.5
(22) Date de dépôt: 04.03.2020
(51) Int. Cl.: B60T 13/58, B60T 13/68, F16K 31/04, F16K 31/12

(54) **VANNE HYDROPNEUMATIQUE AVEC MODULE MÉCATRONIQUE**
HYDROPNEUMATISCHES VENTIL MIT MECHATRONISCHEM MODUL
HYDROPNEUMATIC VALVE WITH MECHATRONIC MODULE

(30) Priorité: 07.03.2019 CH 2772019
(43) Date de publication de la demande: 12.01.2022
(73) Titulaire: Beka, Saint-Aubin S.A., 2024 St-Aubin-Sauges (CH)
(72) Inventeur: GASSER, Olivier, 1820 Veytaux (CH)
(74) Mandataire: P&TS SA (AG, Ltd.)
(86) Numéro de dépôt international: PCT/IB2020/051860
(87) Numéro de publication internationale: WO 2020/178761

(56) Documents cités:
- EP-A1- 0 832 803
- EP-A1- 2 305 524
- EP-B1- 2 305 524
- DE-A1-102014 018 632
- DE-U1-202018 001 859

## Description

### Domaine technique

La présente invention concerne une vanne hydropneumatique comportant en plus des modules hydraulique et pneumatique un module mécatronique, comprenant un module électromécanique et un module électronique de gestion. Le module pneumatique peut alors être activé via le module hydraulique ou le module mécatronique. Cette disposition est particulièrement adaptée aux véhicules agricoles tels que des tracteurs dont le freinage est hydraulique. D'autres véhicules tels que des véhicules de chantiers ou de levage, du type Fenwick, ou tout autre véhicule dont le système de freinage est de type hydraulique, et pouvant être associés à une remorque dont le freinage est de type pneumatique, peut avantageusement être équipé de la vanne de la présente invention.

### Etat de la technique

Les véhicules agricoles, tels que les tracteurs, sont en général équipés d'un système de freinage hydraulique. Les éléments roulants susceptibles d'être attelés aux véhicules agricoles peuvent être quant à eux freinés via un système pneumatique. Des vannes hydropneumatiques existent pour transmettre les commandes de freinage depuis le véhicule de tête vers les véhicules attelés. Des exemples de vannes hydropneumatiques sont connus des documents EP 2 305 524 A1, DE 10 2014 018632 A1, EP 0 832 803 A1 ou DE 20 2018 001859 U1. Certaines vannes sont mêmes pilotées via un élément électrique.

Le document EP2165901 décrit par exemple une telle vanne hydropneumatique où un ensemble de conduites pneumatique peut être piloté par un système électrique, en fonction de l'activation de la pédale de frein du véhicule de tête. L'objet principal étant d'accélérer les temps de réponse du freinage hydropneumatique.

Le document US3779612 décrit l'activation électrique du freinage pneumatique en réponse à l'activation de la pédale de frein du tracteur.

Les aménagements décrits jusque-là nécessitent des opérations de raccordement parfois longues et complexes. Des conduites d'air comprimé spécifiques doivent en l'occurrence être prévues, ce qui augmente les risques de fuite.

De surcroît, les véhicules agricoles peuvent être équipés d'une transmission non étagée. C'est notamment le cas des véhicules électriques, hybrides, ou des véhicules équipés d'une transmission tout ou partie hydrostatique. Le freinage de tels véhicules ne nécessite pas obligatoirement l'activation de la pédale de frein. Les systèmes de commande à pression hydraulique, avec ou sans assistance électrique, reposant sur l'activation de la pédale de frein peuvent alors se révéler inefficaces.

La présente invention propose une vanne hydropneumatique exempt des limitations mentionnées ci-dessus.

Un autre but de l'invention est de pallier aux phénomènes d'hystérèse propres aux systèmes mécaniques impliquant des transferts de fluides comprimés.

Selon l'invention, ces buts sont atteints notamment au moyen d'une vanne hydropneumatique pouvant être activée électriquement indépendamment de l'actionnement de la pédale de frein du véhicule de tête. L'activation de la vanne hydropneumatique est avantageusement proportionnelle au ralentissement du véhicule de tête.

Cette solution présente en outre l'avantage de proposer une vanne hydropneumatique compacte et facilement intégrable aux systèmes de freinage en place. La vanne hydropneumatique selon la présente invention ne requiert en particulier aucune modification des conduites fluidiques tant relatives au système hydraulique qu'au système pneumatique.

### Bref résumé de l'invention

L'invention concerne une vanne hydropneumatique destinée à équiper des véhicules pourvus à la fois d'un système de freinage hydraulique et d'un système de freinage pneumatique. Le terme « véhicule » s'entend au sens large et inclut des trains de véhicules comportant un véhicule de tête, tractant, et un ou plusieurs véhicules tractés. L'invention concerne plus particulièrement une vanne hydropneumatique comprenant un module hydraulique, un module pneumatique et un module mécatronique. Le module mécatronique comporte un module électromécanique et un module électronique de gestion.

Les véhicules concernés ne se limitent pas aux véhicules agricoles ou forestiers mais incluent également tout véhicule de chantier, routier ou de manutention, comportant un système de freinage hydraulique ou électrique et susceptible d'être couplé à une ou plusieurs remorques pourvues d'un système de freinage autonome de type pneumatique. Le véhicule tracteur peut être un véhicule télécommandé.

Le module pneumatique de la vanne comprend une première chambre pneumatique à basse pression. Le terme « basse pression » s'entend comme étant une pression insuffisante pour activer le freinage pneumatique du véhicule. Une basse pression peut être par exemple la pression atmosphérique. Une basse pression peut être également une pression intermédiaire entre la pression atmosphérique et la pression nécessaire à l'activation des freins pneumatiques. Le module pneumatique de la vanne hydropneumatique comporte une seconde chambre pneumatique à haute pression. Le terme « haute pression » désigne une pression de service capable d'activer les freins pneumatiques du véhicule. Une haute pression peut avoir par exemple une valeur de 8 bars, ou 12 bars, ou plus selon le type de véhicule. La seconde chambre pneumatique est alimentée par un circuit d'air comprimé comprenant notamment un compresseur et un réservoir d'air comprimé. D'autres valeurs de haute pression peuvent bien entendu être considérées pour autant qu'elles désignent une pression de service. Les deux chambres pneumatiques sont séparées l'une de l'autre par une membrane empêchant l'air comprimé de passer de la seconde chambre pneumatique haute pression à la première chambre pneumatique basse pression. La membrane peut se déformer ou se déplacer sous l'influence d'un élément poussoir, de manière à laisser passer l'air comprimé depuis la seconde chambre pneumatique vers la première chambre pneumatique, ce qui permet d'activer le freinage. Alternativement, les deux chambres pneumatiques peuvent être séparées l'une de l'autre par un clapet, pouvant passer de la position fermée à ouverte sous l'influence de l'élément poussoir.

La vanne hydropneumatique de la présente invention comporte en outre un module mécatronique. Le module mécatronique comprend un module électromécanique, comportant un moteur électrique et un élément d'activation de l'élément poussoir. Selon l'invention, l'élément poussoir peut être activé indépendamment par le module hydraulique et par le module mécatronique. Pour ce faire, l'élément poussoir peut par exemple comporter une tige disposée de manière à traverser la seconde chambre pneumatique, et comprenant à son extrémité un moyen d'accroche pouvant être agrippé par un élément du module électromécanique. L'élément poussoir est ainsi en mesure d'agir sur une membrane ou un clapet pour activer le freinage, indépendamment de l'activation du module hydraulique.

Selon un aspect particulier de la présente invention, le moyen d'accroche peut comporter une butée disposée à l'extrémité de la tige de l'élément poussoir, de telle manière qu'un élément d'activation du module mécatronique puisse l'agripper. L'élément d'activation peut alors se présenter sous forme d'une bague ou d'un cylindre entourant la tige de l'élément poussoir et pouvant coulisser le long de cette tige jusqu'à atteindre le moyen d'accroche de cette tige. Le mouvement de l'élément d'activation est induit par le moteur électrique du module électromécanique.

Selon un aspect privilégié de l'invention, le moyen d'accroche comporte une butée circulaire disposée à l'extrémité de la tige de l'élément poussoir. L'élément d'activation du module électromécanique contient une bague ou un cylindre rotatif pourvu d'au moins un élément de contact, tel qu'un roulement, et un support disposé autour de l'élément poussoir, dont l'une des deux faces comporte au moins une variation de relief faisant office de came, telle qu'un plan incliné reliant deux niveaux de surface différents. L'élément de contact, ou les éléments de contact du cylindre rotatif sont en contact avec la surface du support comportant les deux niveaux de surface. La rotation du cylindre rotatif autour de la tige de l'élément poussoir induit le passage des éléments de contact d'une surface vers l'autre du support, générant ainsi une force de translation de l'élément poussoir.

Selon un mode de réalisation, le module électronique de gestion du module mécatronique comporte une unité de traitement de données pouvant recevoir et traiter différentes données provenant d'une ou plusieurs sources. En particulier, des données relatives à la conduite du véhicule ou au comportement du véhicule et collectées par des capteurs, tels que des capteurs de pression ou des capteurs de position, peuvent être transmises au module électronique de gestion, qui sera en mesure de les traiter et de piloter le module électromécanique en fonction du résultat d'un tel traitement.

Selon un mode de réalisation particulier de l'invention les modules électromécanique et électronique de gestion sont en mesure de s'activer automatiquement en l'absence d'activation du module hydraulique, notamment grâce aux informations fournies par les capteurs disposés à bord du véhicule. En d'autres termes le module mécatronique s'active ainsi indépendamment sans que le système de freinage hydraulique du véhicule de tête ne soit sollicité.

Alternativement ou en plus, le module mécatronique est en mesure de s'activer de manière concomitante à l'activation du module hydraulique. Dans ce cas l'activation du module mécatronique peut être limitée à une durée inférieure à celle de l'opération de freinage. Par exemple, une brève activation du module mécatronique au début de l'opération de freinage peut être prévue. Un tel arrangement permet d'augmenter la vitesse de réponse du système de freinage. Il permet également de contenir ou de s'affranchir de l'hystérèse naturelle de la vanne hydropneumatique et du système de freinage en fonction des informations transmises par les capteurs ou par les commandes de frein ou par les deux.

La présente invention couvre également un véhicule équipé d'une vanne hydropneumatique telle que décrite ici. Un tel véhicule peut être équipé de capteurs variés embarqués et de lignes de communication reliant ces capteurs à la vanne hydropneumatique. Une ligne de communication inclut par exemple un bus-CAN sans pour autant s'y limiter. D'autres systèmes de communication filaire ou non filaire peuvent être considérés. La vanne hydropneumatique peut également s'adapter aux systèmes existants de manière à s'intégrer facilement à des véhicules après leur conception.

La présente invention couvre également un dispositif de freinage comprenant la vanne hydropneumatique décrite ici, ainsi qu'un système de freinage hydraulique apte à activer le module hydraulique, un système de freinage pneumatique connecté au module pneumatique de la vanne, et un ou plusieurs capteurs connectés au module électronique de la vanne.

### Brève description des figures

Des exemples de mise en oeuvre de l'invention sont indiqués dans la description illustrée par les figures annexées dans lesquelles :

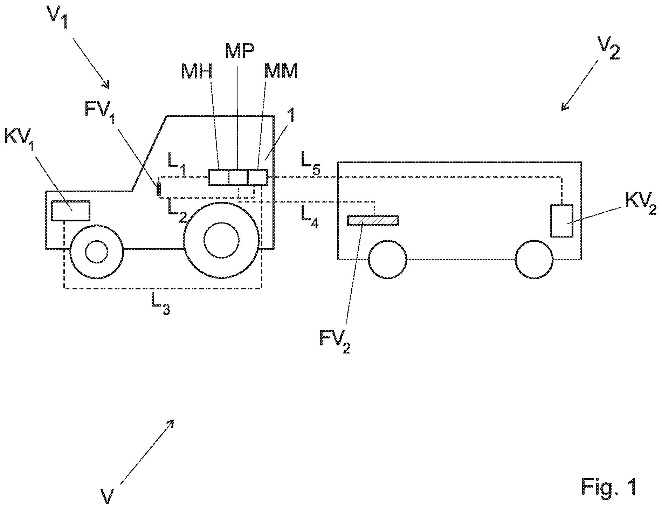

- Figure 1 : vue schématique d'un train de véhicules

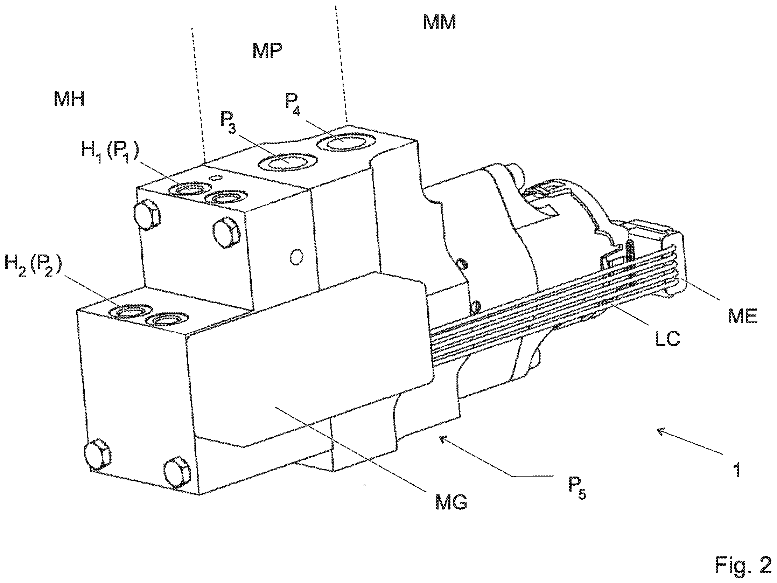

- Figure 2 : vue en perspective de la vanne hydropneumatique selon un mode de réalisation

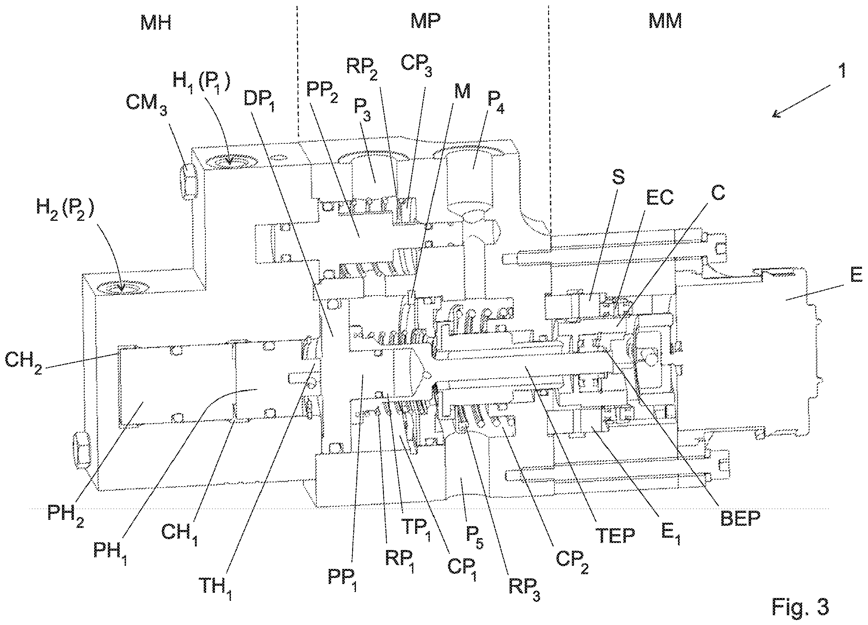

- Figure 3 : vue en coupe longitudinale de la vanne hydropneumatique selon un mode de réalisation

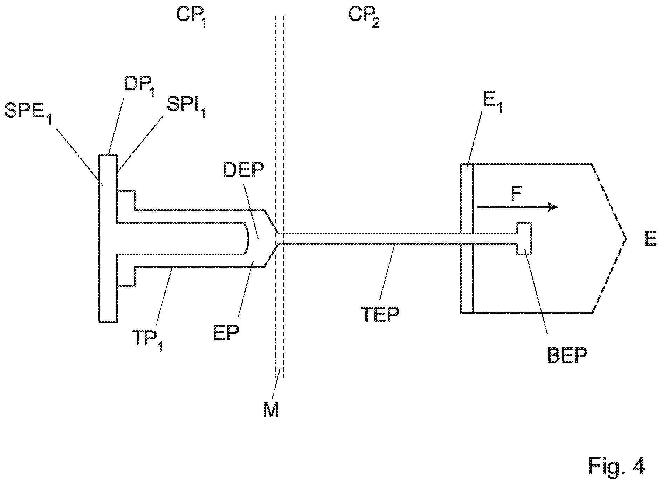

- Figure 4 : vue schématique de l'élément poussoir EP selon un mode de réalisation

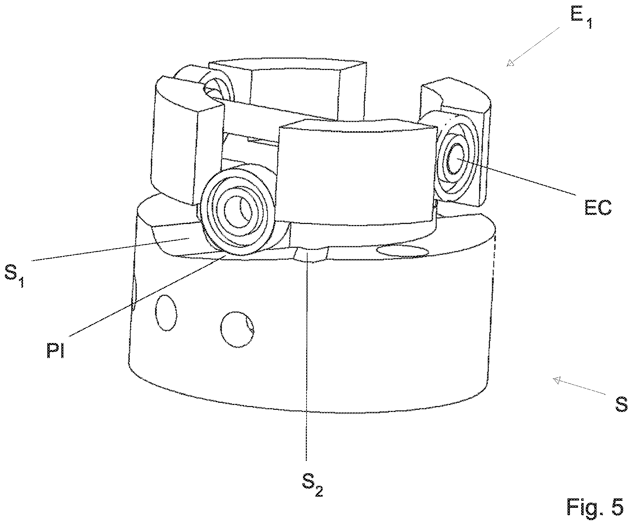

- Figure 5 : vue détaillée de l'élément d'activation comprenant le cylindre rotatif C et le support S

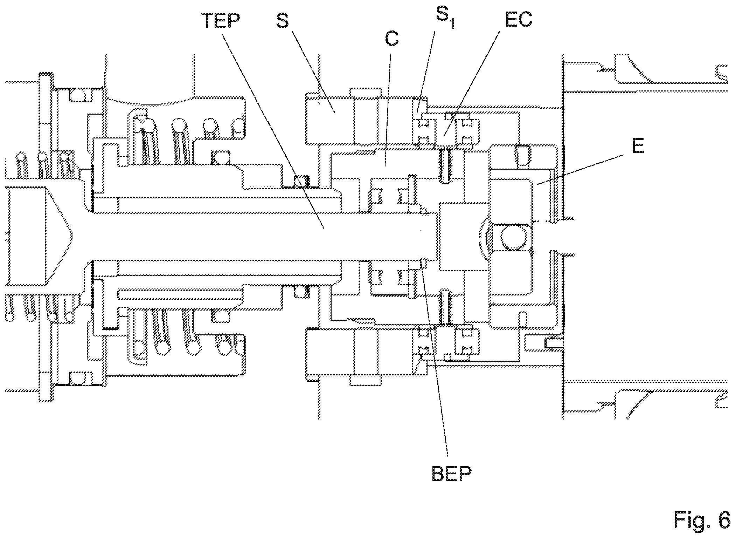

- Figure 6 : vue en coupe de l'élément d'activation et de la tige de l'élément poussoir

### Exemple(s) de mode de réalisation de l'invention

L'invention s'applique de préférence à un train de véhicule **V**, comprenant un premier véhicule **V1** et au moins un second véhicule **V2**, tracté par le premier véhicule **V1**. Le premier véhicule **V1** dispose d'un système de frein hydraulique **FV1** pouvant être activé par un moyen d'activation **PV1** tel qu'une pédale de frein. Le second véhicule **V2** dispose d'un système de freinage pneumatique autonome **FV2**. Le second véhicule peut être notamment une remorque, comprenant un réservoir d'air comprimé ainsi que toutes les connexions fluidiques nécessaire à son freinage pneumatique. Le système de freinage pneumatique du second véhicule **V2** est connecté au système de freinage hydraulique du premier véhicule **V1** au moyen d'une vanne hydropneumatique **1**. La vanne hydropneumatique **1** est disposée sur le véhicule de tête **V1**.

Le premier véhicule peut être pourvu de capteurs **KV1**, permettant notamment de déterminer un ou plusieurs paramètres tels que la vitesse, les changements de vitesses, l'inclinaison du terrain, l'activation des commandes de frein ou d'accélération, ou d'autres paramètres liés au comportement du train de véhicule **V** ou du conducteur. Le second véhicule **V2** peut être équipé d'un ou plusieurs capteurs **KV2**, permettant notamment de déterminer des paramètres tels que sa vitesse ou ses changements de vitesse.

La vanne hydropneumatique **1** selon l'invention comporte un module hydraulique **MH**, un module pneumatique **MP** et un module mécatronique **MM**. Le module pneumatique **MP** est positionné entre le module hydraulique **MH** et le module mécatronique **MM**. Les axes des différents modules peuvent être coaxiaux ou non. Par exemple le module hydraulique MH peut-être disposé parallèlement aux modules pneumatiques et mécatronique. Le module hydraulique **MH** est en connexion fluidique avec le système de frein hydraulique **FV1** du premier véhicule **V1** notamment par une ou plusieurs conduites **L1**, aptes au transfert de fluides hydrauliques. Le module pneumatique **MP** est en connexion fluidique avec le système de frein autonome du second véhicule **V2**, notamment via une ou plusieurs conduites **L4** aptes au transfert d'air comprimé.

Le module mécatronique **MM** comprend un module électromécanique **ME**, comprenant un moteur électrique **E** et un élément d'activation **E1** aptes à initier les mouvements de l'élément poussoir **EP**. Le module mécatronique comprend en outre un module de gestion **MG**, apte à recevoir de l'information, à traiter l'information et à transmettre des informations de commande au module électromécanique **ME** ainsi qu'au second piston pneumatique PP2 si ce dernier est remplacé par une vanne électropneumatique. Le module de gestion **MG** peut être intégré ou associé au module mécatronique **MM**. Lorsqu'il lui est associé, une ou plusieurs lignes de communication et d'alimentation LC sont prévues entre le module de gestion **MG** et le module électromécanique **ME**.

Le module hydraulique **MH** comporte une première conduite d'alimentation **H1**, relié à la conduite **L1** et conduisant l'huile sous une pression **P1** dans une première chambre hydraulique **CH1** délimitée par un premier piston hydraulique **PH1**. Le premier piston hydraulique **PH1** est en contact avec le module pneumatique **MP**. En l'occurrence, la tige **TH1** du premier piston hydraulique **PH1** est en appui sur la tête **DP1** d'un premier piston pneumatique **PP1**, du module pneumatique **MP**. De cette manière, l'arrivée d'huile sous la pression **P1** par le premier conduit d'alimentation **H1**, induit le déplacement du premier piston pneumatique **PP1**.

Le premier piston pneumatique **PP1** comporte une tête **DP1** et une tige **TP1**, la surface extérieure **SPE1** de la tête du premier piston pneumatique **PP1** est en contact avec la tige **TH1** du premier piston hydraulique et reçoit la poussée du premier piston hydraulique **PH1** lors de l'activation du système de freinage hydraulique du tracteur. La tige **TP1** du premier piston pneumatique **PP1** est guidée dans la tête **DEP** d'un élément poussoir **EP**, de manière à pouvoir y coulisser librement. L'élément poussoir **EP** comprend en plus de sa tête **DEP** une tige **TEP** terminée par un élément d'accroche tel qu'une butée **BEP**. La tête de l'élément poussoir **EP** est en contact avec une membrane **M** séparant une première chambre pneumatique **CP1** d'une seconde chambre pneumatique **CP2**. La première chambre pneumatique **CP1** est à basse pression, notamment à pression atmosphérique, alors que la seconde chambre pneumatique **CP2** est sous pression pneumatique supérieure à la pression de la première chambre pneumatique **CP1**. La seconde chambre pneumatique **CP2** est en particulier reliée au système autonome de frein de la remorque **FV2**, et alimentée en air comprimé. La pression de la seconde chambre pneumatique **CP2** peut être par exemple de l'ordre de 8 bars, 12 bars, ou 20 bars, l'air comprimé étant fourni par le système d'air comprimé du véhicule. D'autres pressions peuvent bien sûr être considérées.

Lorsque le premier piston pneumatique **PP1** est activé par le premier piston hydraulique **PH1**, il induit le déplacement de la tête **DEP** de l'élément poussoir **EP**, qui à son tour déplace la membrane **M**. Le déplacement de la membrane **M** induit le transfert de l'air sous pression de la seconde chambre pneumatique **CP2** vers la première chambre pneumatique **CP1**, et l'activation du freinage pneumatique.

L'air à la pression **P3** induit dans la première chambre pneumatique **CP1** exerce une pression sur la surface intérieure **SPI1** de la tête **DP1** du premier piston pneumatique **PP1**, qui s'équilibre avec la pression **P1** exercée par le premier piston hydraulique **PH1**. L'intensité du freinage pneumatique est alors en fonction de la pression d'huile **P1** induite dans le module hydraulique **MH**.

Le ressort de rappel **RP1** associé au premier piston pneumatique PP1, replace les premiers pistons hydraulique **PH1** et pneumatique **PP1** dans leur position initiale lorsque que la pression d'huile **P1** diminue, suite notamment au relâchement de la pédale de frein du tracteur.

Selon un mode de réalisation possible, le module hydraulique **MH** comporte un second piston hydraulique **PH2**, coaxial au premier piston hydraulique **PH1**, et une seconde alimentation hydraulique **H2**, connectée à l'ensemble de conduites **L1**, qui alimente une seconde chambre hydraulique **CH2** à une pression **P2**, la seconde chambre hydraulique **CH2** étant délimitée par le second piston hydraulique **PH2**. L'activation de la pédale de frein du tracteur permet d'alimenter les deux conduites **H1** et **H2** du module hydraulique **MH**, ce qui induit le déplacement simultané des deux pistons hydrauliques **PH1** et **PH2**. Dans le cas où l'une des deux conduites **H1** et **H2** ne serait pas alimentée ou sous-alimentée, lors d'une défaillance par exemple, la pression hydraulique de la conduite opérationnelle suffit à déplacer au moins le premier piston hydraulique **PH1** et à activer le module pneumatique **MP**, via le déplacement du premier piston pneumatique **PP1**. Le nombre de lignes de commande et de pistons hydraulique peut être supérieur à 2, selon les besoins. En particulier, un troisième piston hydraulique peut être prévu (non représenté), coaxial aux deux autres pistons hydrauliques PH1 et PH2, et alimenté en huile par une commande de frein d'urgence du véhicule de tête **V1**. Le freinage pneumatique activé de la sorte pourra répondre de manière proportionnelle à l'intensité du freinage d'urgence activé sur le véhicule de tête **V1** par le chauffeur.

Le module hydraulique **MH** décrit ici est un exemple non limitatif. D'autres conceptions du module hydraulique **MH** sont envisageables, notamment ceux ne comportant qu'un piston.

L'élément poussoir **EP** est ainsi activé par le module hydraulique **MH** lorsque le système hydraulique **FV1** du tracteur est activé, par action sur la pédale de frein ou tout autre organe d'activation du freinage hydraulique.

Optionnellement, le module pneumatique **MP** peut être pourvu d'un second piston pneumatique **PP2**, destiné à pallier à une défaillance éventuelle de la liaison pneumatique de commande **P3** du système de freinage du véhicule tracté **V2**. Cela peut être le cas par exemple lorsque la liaison pneumatique de commande est arrachée ou percée. Le second piston pneumatique **PP2** est usuellement activé par le module hydraulique **MH** via une troisième chambre hydraulique **CH3**, alimentée par le conduit d'alimentation **H1**. Selon un aspect avantageux de la présente invention, le second piston pneumatique **PP2** peut alternativement ou en plus être activé via le module mécatronique **MM**, au moyen par exemple d'une vanne électropneumatique (non représentée). L'activation du second piston pneumatique **PP2** peut s'effectuer via le module mécatronique **MM** notamment suite à la détection d'une perte de pression dans la conduite de commande pneumatique **P3**. Le déplacement du second piston pneumatique **PP2** provoque la fermeture de l'alimentation **P4** en air comprimé provenant du véhicule tracteur **V1**. De manière concomitante, le module mécatronique **MM** actionne l'élément poussoir **EP** de manière à obtenir le débit d'air maximal entre la seconde chambre pneumatique **CP2**, haute pression, et la première chambre pneumatique **CP1**, basse pression, purgeant rapidement le réservoir d'air comprimé du véhicule tracté **V2**, depuis la conduite **P5** vers la conduite **P3**. La chute brutale de pression permet d'activer le cas échéant le freinage d'urgence du véhicule tracté **V2**. L'élément poussoir **EP** peut indépendamment être activé via le piston hydraulique **PH1,** lorsque le module hydraulique est activé. Le module mécatronique MM permet ainsi d'activer le freinage d'urgence indépendamment du module hydraulique **MH** ou en concomitance avec celui-ci. Alternativement, la troisième chambre hydraulique **CH3** et le second piston pneumatique **PP2** peuvent être remplacés par une vanne électropneumatique.

Préférentiellement, lors de l'actionnement de la pédale de frein du tracteur, le module hydraulique **MH** permet d'activer simultanément les premier **PP1** et second **PP2** pistons pneumatiques. Une configuration de module pneumatique **MP** ne comportant pas de second piston pneumatique **PP2** est également envisageable dans le cadre de la présente invention.

Selon la présente invention, l'élément poussoir **EP** peut être activé par le module mécatronique **MM** indépendamment du module hydraulique **MH**. La tige de l'élément poussoir **TEP** traverse la seconde chambre pneumatique **CP2** et se prolonge vers le module électromécanique **ME**. Elle se termine par un moyen d'accroche lui permettant d'être agrippée par un dispositif d'activation **E1**.

Selon un mode de réalisation, le moyen d'accroche prend la forme d'une butée **BEP** sur laquelle un dispositif d'activation **E1**, indépendant de la tige **TEP** de l'élément poussoir **EP**, peut exercer une force de traction **F**. Une telle butée **BEP**, située à l'extrémité ou proche de l'extrémité de la tige **TEP** de l'élément poussoir **EP**, peut être par exemple circulaire et d'un diamètre supérieur à celui de la tige **TEP** de l'élément poussoir **EP**. Elle peut alternativement prendre la forme d'une rainure circulaire proche de l'extrémité de la tige **TEP** de l'élément poussoir **EP**, dans laquelle un ergot ou une mâchoire peut s'insérer et ainsi exercer une force de traction **F**. D'autres dispositions peuvent être envisagées, moyennant le fait que la tige **TEP** de l'élément poussoir **EP** reste libre de mouvement par rapport au dispositif d'activation **E1** tant que le dispositif d'activation **E1** n'est pas mis en fonction.

Le dispositif d'activation **E1** comporte un élément mobile, indépendant de la tige **TEP** de l'élément poussoir **EP**, pouvant être mis en action de manière à interagir avec le moyen d'accroche de la tige **TEP** de l'élément poussoir **EP**. Un tel élément mobile peut être par exemple une bague ou un cylindre **C** disposé autour de la tige **TEP** de l'élément poussoir **EP** et libre de coulisser le long de cette tige, de manière à venir en contact avec le moyen de traction de la tige **TEP**. L'élément mobile peut être alternativement un système de mâchoires pouvant venir en prise avec le moyen d'accroche de la tige **TEP** de l'élément poussoir **EP**. Le dispositif d'activation **E1** est mis en action par un moteur électrique **E**, de préférence adapté pour exercer une force importante dans un débattement réduit.

Selon un aspect privilégié de l'invention, le moyen d'accroche comporte une butée **BEP** circulaire disposée à l'extrémité de la tige **TEP** de l'élément poussoir **EP**. L'élément d'activation **E1** du module électromécanique **ME** comporte une bague ou un cylindre rotatif **C** entourant la tige **TEP** de l'élément poussoir **EP**, la tige **TEP** de l'élément poussoir **EP** restant libre par rapport à l'élément d'activation **E1**. Le cylindre **C** de l'élément d'activation **E1** est pourvu d'au moins un élément de contact **EC**, tel qu'un roulement ou une paire de roulements, destiné à rester en contact avec la surface d'un support fixe **S**. La surface du support fixe S qui est en contact avec l'élément de contact **EC** du cylindre rotatif **C** comporte au moins une variation de relief faisant office de came, telle qu'un plan incliné **PI** reliant deux niveaux de surface **S1** et **S2** différents. La partie interne du cylindre rotatif **C** comporte une surface pouvant entrer en contact avec la butée **BEP** de l'élément poussoir **EP**. La rotation du cylindre **C** de l'élément d'activation **E1** autour de la tige **TEP** de l'élément poussoir **EP** induit le passage des éléments de contact **EC** depuis l'une des surfaces **S1** vers l'autre des surfaces **S2** du support fixe **S**, via le plan incliné **PI**. Le cylindre rotatif C se rapproche alors de la butée **BEP** et peut exercer sur elle une force **F** permettant la translation de l'élément poussoir **EP**. Le support fixe **S** peut par exemple prendre la forme d'une bague ou d'un cylindre fixé à l'intérieur du module mécatronique **MM** et entourant la tige **TEP** de l'élément poussoir **EP**.

D'autres modes de réalisation peuvent être envisagés concernant l'activation de l'élément poussoir **EP**. Par exemple, un ensemble vis-écrou permettant d'induire un mouvement linéaire de l'élément poussoir **EP** est envisagé. Selon une telle disposition, l'élément poussoir **EP** peut être pourvu à son extrémité d'un écrou ou de toute pièce annulaire pourvue d'un filetage sur sa circonférence intérieure. Le module mécatronique **MM** peut comprendre un axe fileté pouvant s'insérer dans la pièce annulaire filetée solidaire de l'élément poussoir **EP** et produire ainsi un mouvement linéaire lors de sa mise en rotation. La disposition inverse, où l'élément poussoir EP est pourvu d'un axe fileté et où le module mécatronique MM comprend une pièce annulaire fileté, est également envisagée. Alternativement, un électroaimant peut être utilisé pour l'activation de l'élément poussoir **EP**.

L'élément poussoir **EP** est libre de se déplacer sous l'activation du module hydraulique **MH**, du fait que le module électromécanique **ME** laisse un débattement suffisant pour le mouvement de la tige **TEP** de l'élément poussoir **EP**.

Lorsque l'activation du freinage pneumatique est jugée nécessaire sans pour autant que la pédale de frein du véhicule de tête **V1** n'ai été actionnée, en d'autres termes sans que le module hydraulique **MH** n'ai été sollicité, alors le moteur électrique **E** actionne le dispositif d'activation **E1** dans le sens de la traction de l'élément poussoir **EP**. La tête **DEP** de l'élément poussoir **EP** sollicite la membrane **M**, qui permet alors le transfert de l'air comprimé depuis la seconde chambre pneumatique **CP2** vers la première chambre pneumatique **CP1**, activant de fait le système de freinage pneumatique de la remorque.

Selon un mode de réalisation privilégié, la tête **DEP** de l'élément poussoir **EP** est libre de se déplacer par rapport au premier piston pneumatique **PP1**. De cette manière, la tête **DP1** du premier piston pneumatique **PP1** reste en contact avec le module hydraulique **MH**, lors de l'activation du freinage pneumatique par le module électromécanique **ME**. Le ressort de rappel **RP1** replace l'élément poussoir **EP** en position initiale lorsque la force de traction **F** disparaît ou diminue, en d'autres termes lorsque le moteur électrique **E** cesse d'être sollicité.

Selon un aspect de la présente invention, le freinage pneumatique est activé indépendamment par le module hydraulique **MH** et le module mécatronique **MM**. Autrement dit, seul l'un ou l'autre des modules hydrauliques **MH** et mécatronique **MM** agit sur l'élément poussoir **EP**. Ainsi, le freinage pneumatique de la remorque peut être activé exclusivement via le module hydraulique **MH**, lors de l'actionnement de la pédale de frein du tracteur, ou de tout autre moyen d'actionnement du module hydraulique **MH**. D'autres moyens d'actionnement du module hydraulique **MH** peuvent inclure par exemple un levier manuel, ou tout autre moyen d'action accessible au chauffeur du véhicule de tête **V1**. Selon cette configuration, le freinage pneumatique peut être actionné via le module mécatronique **MM** lors, par exemple, d'une décélération du véhicule de tête **V1** sans activation du module hydraulique **MH**. Une décélération peut être déterminée à l'aide d'un capteur ou d'un ensemble de capteurs **KV1** spécifiques disposés sur le véhicule **V**, ou bien au moyen d'un calculateur déjà présent sur le véhicule **V** et permettant par exemple de déterminer la dérivée de la vitesse. Une décélération peut être déterminée alternativement d'après le comportement du chauffeur, lors du relâchement de la pédale d'accélérateur par exemple. Un capteur de position de la pédale d'accélération peut à cet effet permettre de déterminer un changement de position susceptible d'induire un ralentissement du véhicule de tête **V1**. Alternativement, l'inclinaison du terrain peut être mesurée à l'aide d'un capteur spécifique et déterminer une éventuelle pente, pouvant nécessiter l'activation du freinage de la remorque. La nécessité de l'activation du freinage de la remorque, ainsi que le dosage de son intensité, peuvent être déterminés sur la base d'une combinaison de mesures et de détections obtenue par différents capteurs et selon différents paramètres, comprenant par exemple la charge du véhicule ou son centre de gravité. Des capteurs **KV2** peuvent être par exemple disposés sur la remorque.

Dans le cas où le freinage pneumatique de la remorque est jugé nécessaire, l'information correspondante est transmise au module mécatronique via une ou plusieurs lignes de transmission **L3**, **L5**. L'information peut être transmise via le système électrique installé sur le véhicule. L'information peut par exemple transiter via le bus CAN, ou via d'autres éléments filaires disponibles. Il peut également être transmis par voie non filaire telle que bluetooth, wifi ou selon d'autres protocoles de communication à disposition.

Le moteur électrique **E** est alors activé de manière automatique, selon une intensité et une durée correspondant aux besoins de freinage de la remorque.

Le moteur électrique **E** agit directement sur l'élément poussoir **EP** avec des délais souvent plus courts que lors d'un transfert de pression depuis le module hydraulique **MH** vers le module pneumatique **MP**. Une telle disposition est par conséquent souvent adaptée aux situations d'urgence.

Selon un autre mode de fonctionnement de l'invention, le moteur électrique **E** peut être activé de manière concomitante avec le module hydraulique **MH**. Dans ce cas, le module mécatronique **MM** peut être connecté au système de frein hydraulique du véhicule de tête **V1**. La connexion du module mécatronique **MM** au système hydraulique peut se faire via la pédale de frein du tracteur ou tout autre élément usuellement destiné à activer le module hydraulique **MH**, ou tout capteur inclus dans le système hydraulique, tel que des capteurs de pression hydraulique. Le module mécatronique **MM** peut notamment être connecté au système de frein hydraulique via une connexion **L2**. Une telle disposition permet en particulier de pallier aux inconvénients liés à la dynamique des fluides. Lors d'un freinage d'urgence, le moteur électrique **E** peut être plus réactif que le couple fluidique module hydraulique **MH** / module pneumatique **MP**. Les premiers instants du freinage peuvent être alors exercés via le moteur électrique **E**, avant que les pressions d'huile et d'air comprimé des modules hydraulique **MH** et pneumatique **MP** ne soient pleinement efficaces. Au début du freinage le module mécatronique **MM** est en mesure de reconnaître par l'intermédiaire des divers capteurs un besoin de freinage même très faible du véhicule tracté **V2** et commande l'ouverture de la vanne **1** par l'intermédiaire du module électromécanique **ME** de manière à compenser les frottements internes des modules hydraulique **MH** et pneumatique **MP** et les frottements internes du système de freinage du véhicule tracté **V2**.

La connexion **L2** n'exclut pas la connexion du module mécatronique **MM** avec la connexion **L3** et avec les capteurs éventuels **KV1**, **KV2** du véhicule, ni son activation automatique indépendante de l'activation du module hydraulique **MH** telle que décrite ci-avant.

Selon une disposition particulière, le moteur électrique **E** peut être activé seulement temporairement pendant une phase de freinage. Il peut être par exemple activé au moment du déclanchement du freinage hydraulique par appui sur la pédale de frein, ou tout autre élément d'activation du freinage hydraulique, puis stoppé dans la suite de l'opération de freinage. Une telle disposition permet de contrebalancer l'hystérèse naturelle du système hydropneumatique tout en limitant les efforts combinés du moteur électrique **E** et du module hydraulique **MH**.

Selon une disposition particulière, le module mécatronique **MM** peut comprendre une fonction de frein de parc du véhicule tracté **V2**. Lorsqu'il est activé à cet effet depuis le véhicule de tête **V1**, l'élément d'activation **E1** place l'élément poussoir **EP** dans une position stable qui permet de conserver une pression maximale dans la première chambre pneumatique **CP1**, ceci durant un temps indéterminé et sans consommation d'énergie électrique. Selon un mode de réalisation de l'invention, la fonction de frein de parc peut être mise en oeuvre grâce à une troisième surface **S3** disposée sur la surface du support **S** en contact avec les éléments de contact **EC** de l'élément d'activation **E1**. Cette troisième surface **S3** permet alors de caler l'élément de contact ou les éléments de contact **EC** de l'élément d'activation **E1** dans une position extrême de verrouillage des freins pneumatiques. En particulier, la troisième surface **S3** peut se résumer à une encoche capable d'accueillir le ou les éléments de contact **EC**.

Selon une disposition optionnelle, le module électronique de gestion **MG** est en outre capable d'effectuer des tests diagnostic à intervalles réguliers, ou à des périodes prédéterminées. Une période prédéterminée peut être par exemple le démarrage du véhicule **V**, ou le moment du couplage des premier **V1** et second **V2** véhicules. Les termes « intervalles réguliers » s'entendent comme étant une durée d'utilisation prédéterminée, ou un kilométrage prédéfini. Certains paramètres peuvent être mesurés et vérifiés en permanence par le module de gestion MG. Les tests diagnostic ainsi réalisés comprennent en particulier des tests de cohérence des informations transmises par les capteurs **KV1**, **KV2** du véhicule **V**, avec ou sans activation des commandes de frein. Les tests diagnostic peuvent en outre ou alternativement comparer les informations transmises par les divers capteurs et les informations relatives aux consignes de freinage, permettant ainsi de déceler un éventuel dysfonctionnement du dispositif. L'information relative au dysfonctionnement est transférée au véhicule de tête **V1** via le système de communication du véhicule **V** par la fonction de diagnostic intégrée dans le module électronique de gestion **MG**.

Le module mécatronique **MM** peut comprendre en plus du dispositif d'activation **E1** et du moteur électrique **E**, selon ses besoins, une unité de traitement des données reçues par les capteurs **KV1**, **KV2** du véhicule **V**. Il peut eu outre être connecté à une batterie indépendante branchée sur le générateur du tracteur. Le module mécatronique peut en plus être connecté à un ou plusieurs systèmes d'alarme, notamment dans le cas où il est sollicité de manière automatique en réponse aux données recueillies par les capteurs **KV1**, **KV2**. Une telle alarme peut se limiter à des signaux lumineux et/ou sonores dans l'habitacle du chauffeur. Alternativement ou en plus, un signal radio peut être émis à destination d'un poste de contrôle ou sur une plateforme téléphonique ou sur un ou plusieurs appareils connectés.

Selon une disposition particulière, la vanne hydropneumatique selon la présente invention peut offrir un frein de secours proportionnel. Lors de l'actionnement d'une commande spécifique du véhicule de tête **V1**, le module mécatronique **MM** est alors en mesure d'actionner le système de freinage pneumatique comme indiqué plus haut. Le degré de rotation du cylindre **C** peut être contrôlé de manière à doser l'intensité du freinage pneumatique. Dans le cas mentionné plus haut où une troisième commande hydraulique peut être actionnée depuis le véhicule de tête **V1**, telle qu'un levier manuel d'urgence, le module mécatronique **MM** peut être activé de manière proportionnelle en concomitance avec le module hydraulique **MH**.

Selon une disposition particulière, la vanne hydropneumatique selon la présente invention peut être utilisée sans le module hydraulique MH

### Numéros de référence employés sur les figures

- C: Cylindre rotatif
- MH: Module hydraulique
- MP: Module pneumatique
- ME: Module électromécanique
- MG: Module électronique de gestion
- MM: Module Mécatronique
- H1 ; P1: Première conduite hydraulique, à la pression P1
- H2 ; P2: Seconde conduite hydraulique, à la pression P2
- PH1: Premier piston hydraulique
- P3: Conduite de commande de freinage du véhicule tracté V2
- P4: Conduite d'alimentation en air comprimé du système de freinage
- P5: Conduite d'alimentation en air comprimé du second véhicule V2
- PI: Plan incliné de la butée
- PH2: Second piston hydraulique
- DP1: Tête du premier piston pneumatique
- PP1: Premier piston pneumatique
- PP2: Second piston pneumatique
- RH: Ressort de rappel hydraulique
- RP1: Premier ressort de rappel pneumatique
- RP2: Second ressort de rappel pneumatique
- RP3: Troisième ressort de rappel pneumatique
- E: Moteur électrique
- E1: Elément d'activation
- EC: Elément de contact de l'élément d'activation E1
- T1: Tige de traction
- E1: Dispositif d'activation
- CH1: Première chambre hydraulique
- CH2: Seconde chambre hydraulique
- CH3: Troisième chambre hydraulique
- TH1: Tige du premier piston hydraulique
- S: Support fixe
- S1, S2, S3: Première, seconde et troisième surfaces du support S
- SPE1: Surface extérieure du premier piston pneumatique
- SPI1: Surface intérieure du premier piston pneumatique
- TP1: Tige du premier piston pneumatique
- DEP: Tête de l'élément poussoir
- EP: Elément poussoir
- TEP: Tige de l'élément poussoir
- BEP: Butée de l'élément poussoir
- CH3: troisième chambre hydraulique
- KV1, KV2: Capteurs
- V, V1, V2: Véhicules
- L1, L2, L3, L4, L5: Lignes de connexion
- FV1: Système de freinage du premier véhicule
- FV2: Système de freinage du second véhicule
- PV1: Pédale de frein hydraulique

## Revendications

1. Vanne hydropneumatique (1) comprenant un module hydraulique (MH) et un module pneumatique (MP), le module pneumatique comprenant :
- une première chambre pneumatique (CP1) à basse pression, comprenant un premier piston pneumatique (PP1), et une seconde chambre pneumatique (CP2) à haute pression, les deux chambres pneumatiques étant séparées l'une de l'autre par une membrane (M),
- un élément poussoir (EP) permettant d'agir sur la membrane (M) de manière à laisser passer l'air comprimé à haute pression depuis la seconde chambre pneumatique (CP2) vers la première chambre pneumatique (CP1),
**caractérisée en ce que** la vanne hydropneumatique (1) comporte en outre un module mécatronique (MM), comprenant un module électronique de gestion (MG), un module électromécanique (ME), comprenant lui-même un moteur électrique (E) et un élément d'activation (E1), et **en ce que** l'élément poussoir (EP) peut être activé indépendamment par le module hydraulique (MH) et le module électromécanique (ME).

2. Vanne hydropneumatique selon la revendication 1, **caractérisée en ce que** l'élément poussoir (EP) comporte une tige (TEP) et une tête (DEP), la tête (DEP) étant disposée dans la première chambre pneumatique (CP1), la tige (TEP) étant disposée de manière à traverser la seconde chambre pneumatique (CP2), et un moyen d'accroche pouvant être agrippé par l'élément d'activation (E1) du module mécatronique (MM).

3. Vanne hydropneumatique selon la revendication 2, **caractérisée en ce que** le moyen d'accroche comporte une butée (BEP) disposée à l'extrémité de la tige (TEP) de l'élément poussoir (EP), et **en ce que** l'élément d'activation (E1) comporte une bague ou un cylindre mobile (C) autour de la tige (TEP) de l'élément poussoir (EP), et pouvant être actionné par le moteur électrique (E).

4. Vanne hydropneumatique selon la revendication 3, **caractérisée en ce que** l'élément d'activation (E1) comporte en outre un support S, dont une surface comporte au moins deux niveaux distincts (S1) et (S2) reliés par un plan incliné (PI) faisant office de came, et **en ce que** l'élément d'activation (E1) comporte au moins un élément de contact (EC), en contact avec les surfaces (S1) et (S2) du support (S) permettant d'induire un mouvement longitudinal de l'élément poussoir (EP) lorsque l'élément d'activation (E1) est mis en rotation par le moteur électrique (E).

5. Vanne hydropneumatique selon l'une ou l'autre des revendications précédentes **caractérisée en ce que** le module mécatronique (MM) est connecté à un ou plusieurs capteurs (KV1), (KV2) et **en ce qu'**il est activé automatiquement en l'absence d'activation du module hydraulique (MH).

6. Vanne hydropneumatique selon l'une ou l'autre des revendications précédentes, **caractérisée en ce que** le module mécatronique (MM) est activé de manière concomitante à l'activation du module hydraulique (MH).

7. Vanne hydropneumatique selon l'une ou l'autre des revendications précédentes, **caractérisée en ce que** le module pneumatique (MP) comporte un second piston pneumatique (PP2) activable par une vanne électropneumatique pouvant être déclenchée par le module mécatronique (MM).

8. Vanne hydropneumatique selon l'une ou l'autre des revendications précédentes, **caractérisée en ce que** le module mécatronique (MM) est activé de manière concomitante avec l'activation du module hydraulique (MH) au début de l'opération de freinage puis désactivé.

9. Vanne hydropneumatique selon l'une ou l'autre des revendications précédentes, **caractérisé en ce que** le degré de rotation d'un cylindre rotatif (C) de l'élément d'activation (E1) peut être contrôlé de manière proportionnelle au degré d'activation d'une commande d'un véhicule de tête (V1).

10. Train de véhicules (V), comprenant un premier véhicule (V1) pourvu d'un système de freinage hydraulique (FV1), et d'au moins un second véhicule (V2) pourvu d'un système de freinage pneumatique (FV2), **caractérisé en ce que** les systèmes de freinage hydraulique (FV1) du premier véhicule (V1) et pneumatique du second véhicule (FV2) sont connectés via une vanne hydropneumatique (1) selon les revendications 1 à 9.

## Patentansprüche

1. Hydropneumatisches Ventil (1), welches ein Hydraulikmodul (MH) und ein Pneumatikmodul (MP) umfasst, wobei das Pneumatikmodul umfasst:
- eine erste pneumatische Niederdruckkammer (CP1), die einen ersten pneumatischen Kolben (PP1) umfasst, und eine zweite pneumatische Hochdruckkammer (CP2), wobei die beiden pneumatischen Kammern durch eine Membran (M) voneinander getrennt sind,
- ein Druckelement (EP), mit dem auf die Membran (M) eingewirkt werden kann, um Druckluft mit hohem Druck von der zweiten pneumatischen Kammer (CP2) zur ersten pneumatischen Kammer (CP1) durchzulassen,
**dadurch gekennzeichnet, dass** das hydropneumatische Ventil (1) ferner ein mechatronisches Modul (MM) aufweist, das ein elektronisches Steuermodul (MG), ein elektromechanisches Modul (ME), welches seinerseits einen Elektromotor (E) und ein Aktivierungselement (E1) aufweist, umfasst, wobei dass das Druckelement (EP) unabhängig durch das Hydraulikmodul (MH) und das elektromechanische Modul (ME) aktiviert werden kann.

2. Hydropneumatisches Ventil nach Anspruch 1, **dadurch gekennzeichnet, dass** das Druckelement (EP) einen Schaft (TEP) und einen Aufsatz (DEP) aufweist, wobei der Aufsatz (DEP) in der ersten pneumatischen Kammer (CP1) angeordnet ist, der Schaft (TEP) so angeordnet ist, dass er die zweite pneumatische Kammer (CP2) durchquert, und ein Fangelement, das durch das Aktivierungselement (E1) des mechatronischen Moduls (MM) gegriffen werden kann.

3. Hydropneumatisches Ventil nach Anspruch 2, **dadurch gekennzeichnet, dass** das Fangelement einen Anschlag (BEP) umfasst, welches am Ende des Schafts (TEP) des Druckelements (EP) angeordnet ist, und dass das Aktivierungselement (E1) einen Ring oder einen Zylinder (C) umfasst, der um den Schaft (TEP) des Druckelements (EP) herum beweglich ist und durch den Elektromotor (E) betätigt werden kann.

4. Hydropneumatisches Ventil nach Anspruch 3, **dadurch gekennzeichnet, dass** das Aktivierungselement (E1) außerdem einen Träger (S) umfasst, dessen eine Oberfläche mindestens zwei unterschiedliche Ebenen (S1) und (S2) umfasst, die durch eine geneigte Ebene (PI) verbunden sind, die als Nocke fungiert, und dass das Aktivierungselement (E1) mindestens ein Kontaktelement (EC) umfasst, das mit den Oberflächen (S1) und (S2) des Trägers (S) in Kontakt steht und sofern das Aktivierungselement (E1) durch den Elektromotor (E) in Drehung versetzt wird.

5. Hydropneumatisches Ventil nach einem der vorhergehenden Ansprüche, **dadurch gekennzeichnet, dass** das mechatronische Modul (MM) mit einem oder mehreren Sensoren (KV1), (KV2) verbunden ist und dass es automatisch aktiviert wird, wenn keine Aktivierung des Hydraulikmoduls (MH) vorliegt.

6. Hydropneumatisches Ventil nach einem der vorhergehenden Ansprüche, **dadurch gekennzeichnet, dass** das mechatronische Modul (MM) gleichzeitig mit der Aktivierung des Hydraulikmoduls (MH) aktiviert wird.

7. Hydropneumatisches Ventil nach einem der vorhergehenden Ansprüche, **dadurch gekennzeichnet, dass** das pneumatische Modul (MP) einen zweiten pneumatischen Kolben (PP2) aufweist, der durch ein elektropneumatisches Ventil aktiviert werden kann, das durch das mechatronische Modul (MM) ausgelöst werden kann.

8. Hydropneumatisches Ventil nach einem der vorhergehenden Ansprüche, **dadurch gekennzeichnet, dass** das mechatronische Modul (MM) gleichzeitig mit der Aktivierung des Hydraulikmoduls (MH) zu Beginn des Bremsvorgangs aktiviert und anschließend deaktiviert wird.

9. Hydropneumatisches Ventil nach einem der vorhergehenden Ansprüche, **dadurch gekennzeichnet, dass** der Drehgrad eines Drehzylinders (C) des Aktivierungselements (E1) proportional zum Aktivierungsgrad einer Steuerung eines Führungsfahrzeugs (V1) steuerbar ist.

10. Fahrzeugzug (V), umfassend ein erstes Fahrzeug (V1), das mit einem hydraulischen Bremssystem (FV1) ausgebildet ist, und mindestens ein zweites Fahrzeug (V2), das mit einem pneumatischen Bremssystem (FV2) versehen ist, **dadurch gekennzeichnet, dass** das hydraulische Bremssystem (FV1) des ersten Fahrzeugs (V1) und das pneumatische Bremssystem (FV2) des zweiten Fahrzeugs über ein hydropneumatisches Ventil (1) gemäß den Ansprüchen 1 bis 9 verbunden sind.

## Claims

1. A hydropneumatic valve (1) comprising a hydraulic module (MH) and a pneumatic module (MP), the pneumatic module comprising:
- a first pneumatic chamber (CP1) at low pressure, comprising a first pneumatic piston (PP1), and a second pneumatic chamber (CP2) at high pressure, the two pneumatic chambers being separated from each other by a membrane (M),
- a pushing element (EP) for acting on the membrane (M) so as to let compressed air at high pressure pass from the second pneumatic chamber (CP2) to the first pneumatic chamber (CP1),
**characterized in that** the hydropneumatic valve (1) further comprises a mechatronic module (MM), comprising an electronic management module (MG), an electromechanical module (ME), itself comprising an electric motor (E) and an activation element (E1), and **in that** the pushing element (EP) can be activated independently by the hydraulic module (MH) and the electromechanical module (ME).

2. Hydropneumatic valve according to claim 1, **characterized in that** the pushing element (EP) comprises a rod (TEP) and a head (DEP), the head (DEP) being arranged in the first pneumatic chamber (CP1), the rod (TEP) being arranged so as to pass through the second pneumatic chamber (CP2), and a gripping means which can be gripped by the activating element (E1) of the mechatronic module (MM).

3. Hydropneumatic valve according to claim 2, **characterized in that** the gripping means comprises a stop (BEP) arranged at the end of the rod (TEP) of the pushing element (EP), and **in that** the activation element (E1) comprises a ring or cylinder (C) movable around the rod (TEP) of the pushing element (EP), and capable of being actuated by the electric motor (E).

4. Hydropneumatic valve according to claim 3, **characterized in that** the activation element (E1) further comprises a support (S), one surface of which comprises at least two distinct levels (S1) and (S2) connected by an inclined plane (PI) acting as a cam, and **in that** the activation element (E1) comprises at least one contact element (EC), in contact with the surfaces (S1) and (S2) of the support (S), making it possible to induce a longitudinal movement of the pushing element (EP) when the activation element (E1) is set in rotation by the electric motor (E).

5. Hydropneumatic valve according to any one of the preceding claims, **characterized in that** the mechatronic module (MM) is connected to one or more sensors (KV1), (KV2) and **in that** it is activated automatically in the absence of activation of the hydraulic module (MH).

6. Hydropneumatic valve according to any one of the preceding claims, **characterized in that** the mechatronic module (MM) is activated concomitantly with the activation of the hydraulic module (MH).

7. Hydropneumatic valve according to any one of the preceding claims, **characterized in that** the pneumatic module (MP) comprises a second pneumatic piston (PP2) that can be activated by an electropneumatic valve that can be triggered by the mechatronic module (MM).

8. Hydropneumatic valve according to any one of the preceding claims, **characterized in that** the mechatronic module (MM) is activated concomitantly with the activation of the hydraulic module (MH) at the beginning of the braking operation and then deactivated.

9. A hydropneumatic valve according to any one of the preceding claims, **characterized in that** the degree of rotation of a rotating cylinder (C) of the activation element (E1) can be controlled in proportion to the degree of activation of a command of a lead vehicle (V1).

10. A train of vehicles (V), comprising a first vehicle (V1) provided with a hydraulic braking system (FV1), and at least one second vehicle (V2) provided with a pneumatic braking system (FV2), **characterized in that** the hydraulic braking system (FV1) of the first vehicle (V1) and the pneumatic braking system of the second vehicle (FV2) are connected via a hydropneumatic valve (1) according to claims 1 to 9.
